# EUROPEAN PATENT APPLICATION

(11) **EP 0 719 719 A1**
(43) Date of publication of application: **03.07.1996**
(21) Application number: 95203675.4
(22) Date of filing: 29.12.1995
(51) Int. Cl.: B65G 47/51, A21C 13/02, A21C 15/00, B65G 15/06

(54) **Conveyor for the purpose of storing products**

(30) Priority: 29.12.1994 NL 9402236
(71) Applicant: GEBR. VAN CAPELLEVEEN B.V., NL-3972 NE Driebergen (NL)
(72) Inventor: van Capelleveen, Pieter, NL-3921 DG Elst (NL)
(74) Representative: Smulders, Theodorus A.H.J., Ir.

(57) **Abstract**

A storage apparatus for products and/or product carriers, such as for instance loaves of bread and/or baking tins wherein or whereon loaves of bread or the like are located, the storage apparatus comprising a storage area (1) containing a number of floors (2a-2f), each floor (2a-2f) being formed by one endless conveyor belt or chain (3), closed in itself, the conveyor belts or chains (3) of the different floors (2a-2f) each being independently drivable relative to one another, the product-supporting conveyor part (3a) on each floor being bounded by an entrance (4) and an exit (5), and a return part (3b) of each endless conveyor belt or chain (3) which forms a floor (2a-2f) being located in a cleaning area (6) located outside the storage area (1), in which cleaning area (6) a cleaning apparatus (7) is provided adjacent each return part for cleaning the conveyor belt or chain (3).

## Description

The invention relates to an apparatus according to the preamble of claim 1.

Such an apparatus is known from for instance NL-A-7702497.

The known apparatus has as an advantage that it has a minimum belt or chain length relative to the available length of the storage area.

A drawback of the known apparatus is that the cleaning of the conveyor belt or chain can only be performed with difficulty, as the cleaning operations would have to take place in the area where the products are stored. Hence, the cleaning of the conveyor belt or chain causes the risk of the products being fouled.

A second drawback of the known apparatus is that the products can only be processed according to the first-in-first-out principle, because the known apparatus has a single endless conveyor belt or chain which extends over all floors and has only one entrance and one exit. Products requiring a longer storage than other products, for instance because the rising or cooling time of these products is longer, will cause the other products to remain in the apparatus unnecessarily long, where they occupy storage space unnecessarily. Consequently, this has a highly adverse effect on the storage capacity of the apparatus which, after all, will largely be filled with products that in fact no longer require storage.

To overcome this problem, EP-A-0 216 409 proposed an apparatus provided with a storage area consisting of a number of floors, each floor comprising a number of independently drivable conveyor belts, closed in themselves. However, to this apparatus the first-mentioned drawback likewise applies, namely that cleaning is only possible in the storage area.

Another drawback of this known apparatus is that the ratio between the length of the conveyor belt or chain needed and the length of the storage area is particularly unfavorable. Each product-supporting conveyor part requires a return part of a corresponding length. Owing to the great amount of conveyor belt or chain needed for this known apparatus for forming a given length of storage area, this apparatus is particularly costly, both with regard to its manufacture and with regard to its maintenance. After all, the conveyor belts or chains constitute the parts of the apparatus which are subject to wear. Moreover, the cost price of the apparatus becomes high because of the particularly large number of driving mechanisms incorporated therein. In fact, each endless conveyor belt or chain, of which there are a number per floor, has its own driving mechanism.

The object of the invention is to provide an apparatus without the above-mentioned drawbacks, i.e. an apparatus which does not function according to the first-in-first-out principle and whose ratio between the storage length and the belt or chain length required is favorable and whose belt or chain can moreover be cleaned without causing the risk that the products to be processed are fouled thereby.

To that end, the apparatus according to the invention is characterized by the features of claim 1.

As each floor is formed by a single endless conveyor belt or chain, closed in itself and independently drivable, different products can be processed by the apparatus which require mutually different storage times. Some floors can for instance be reserved for products of a short storage time, while by contrast, other floors are used for products requiring a longer storage time.

Because the return part of each floor extends outside the storage area and is there cleaned by the cleaning apparatus, the risk of the products being fouled through the cleaning of the conveyor belt or chain is minimized.

As the product-supporting conveyor part according to the invention follows a path different from the return part, the length of the return path can be kept short and the product-supporting conveyor part can be given a length required for the desired length of the storage area. In this manner, the ratio between the storage length and the belt or chain length is particularly favorable, which has a favorable effect on the cost price of the apparatus.

In accordance with a further elaboration of the invention, the above-mentioned ratio between storage length and belt or chain length is optimized by the features of claim 2.

Further elaborations according to the invention are set forth in the subclaims and will be specified on the basis of an exemplary embodiment with reference to the accompanying drawing, wherein:

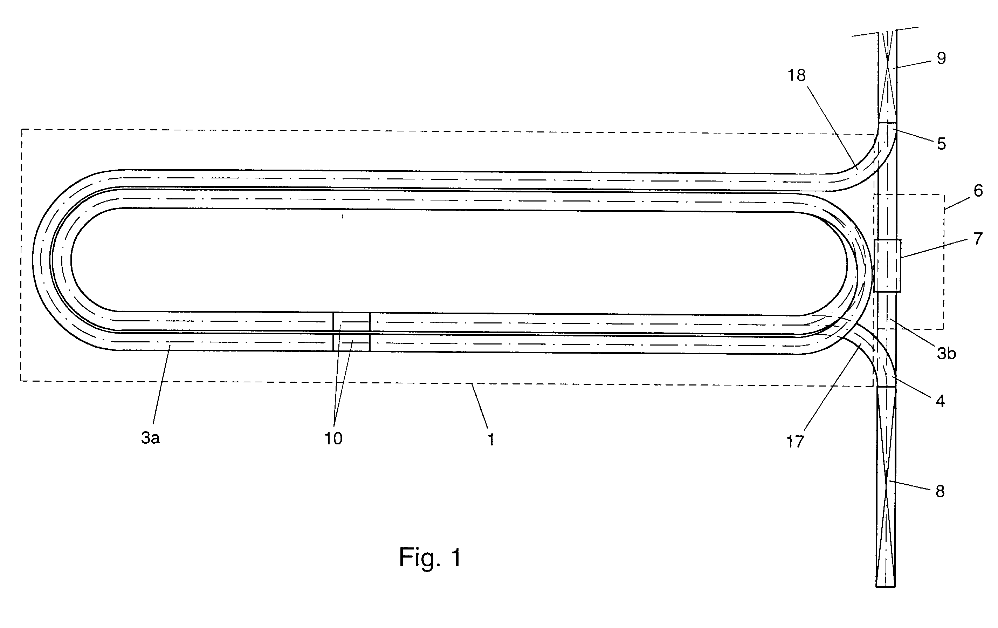

Fig. 1 is a top-plan view of an exemplary embodiment of the apparatus according to the invention;

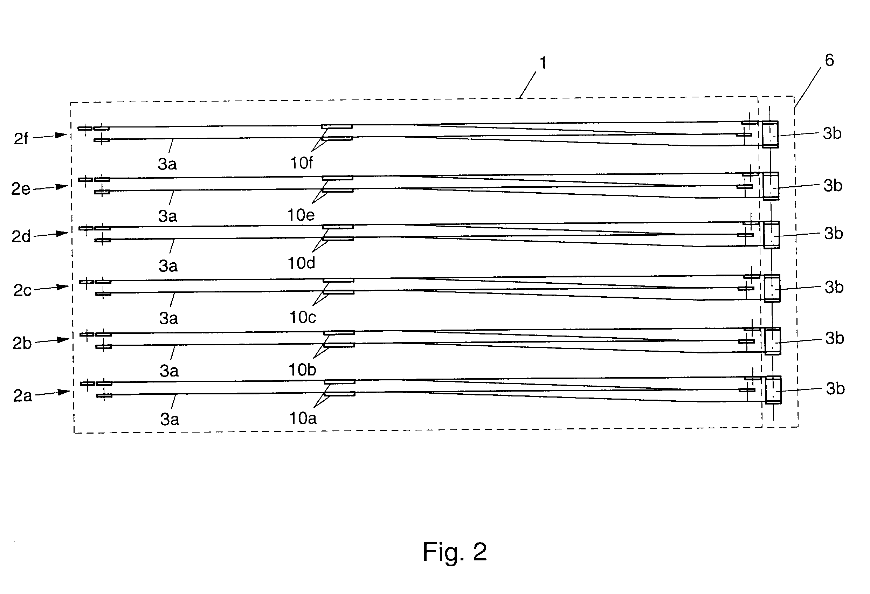

Fig. 2 is a side elevation of the exemplary embodiment shown in Fig. 1; and
Fig. 3 is a schematic side elevation of the driving mechanism.

The drawing shows an exemplary embodiment of a storage apparatus for products, such as for instance loaves of bread, and/or product carriers, such as for instance baking tins in or on which loaves of bread or the like are located. The storage apparatus comprises a storage area 1 containing a number of floors 2a-2f. Each floor 2a-2f is formed by one endless conveyor belt or chain 3, closed in itself. The conveyor belts or chains 3 from the different floors 2a-2f are each independently drivable relative to one another. On each floor 2a-2f, the product-supporting conveyor part 3a is bounded by an entrance 4 and an exit 5. A return part 3b of each endless conveyor belt or chain 3 forming a floor 2a-2f is located in a cleaning area 6 outside the storage area 1. Provided in the cleaning area 6, adjacent each return part 3b, is a cleaning apparatus 7 for cleaning the conveyor belt or chain 3.

In order to create a considerable amount of storage space, the product-supporting conveyor part 3a moves through a number of loops, which loops are preferably formed by straight track parts interconnected via bends. The return part 3b connects the entrance 4 to the exit 5 of the product-supporting conveyor part 3a via a shortest possible path. It is thus provided that a minimum belt or chain length is required for forming a given storage length.

The entrance 3 and the exit 4 of the product-supporting conveyor part 3a are in line and each connect, via a perpendicular bend 17 and 18 respectively in the product-supporting conveyor part 3a, to a straight track part of the looped product-supporting conveyor part 3a. The entrance 4 and the exit 5 being in line, the storage apparatus can readily be incorporated into a straight conveying path as a sort of branch. Moroever, it is thus easily provided that the return part 3b has a minimum length while nevertheless extending outside the storage area 1.

To provide that each floor 2a-2f can be loaded with products, each floor entrance 4 and each floor exit 5 of the storage apparatus is connectable, via a switch 8, 9, to a feed conveyor and a discharge conveyor respectively. The switches 8, 9 will be so-called vertical switches, i.e. switches which can bridge a difference in height. If the discharge or feed capacity of one discharge or feed conveyor respectively is too small, then the discharge of the storage apparatus can be distributed over two discharge conveyors by means of a horizontal switch, not shown, or the feed coming from two feed conveyors can be joined together by means of a horizontal switch.

Optionally, the storage apparatus can also be designed as a raising room or as a cooling apparatus. For this purpose, at least the storage area 1 is then located in a casing wherein the climatologic conditions are controllable.

In a preferred embodiment of the storage apparatus, the conveyor chain 3 comprises at least two link chains of the ship's anchor type, which link chains extend in the direction of the conveying path and are interconnected by cross-bars which constitute the bearing surface of the conveyor chain 3. Such a chain is for instance known from NL-B-165 705. Such chains can be manufactured in an economical manner and can move in bends through the links sliding into each other.

In accordance with the invention, each floor 2a-2f comprises an autonomously controllable driving mechanism 10a-10f. This enables the processing of products which require different storage times, without the result being that products which require only a short storage time nevertheless have to stay in the storage apparatus for a long time owing to the fact that they are located behind a charge of products which require a long storage time.

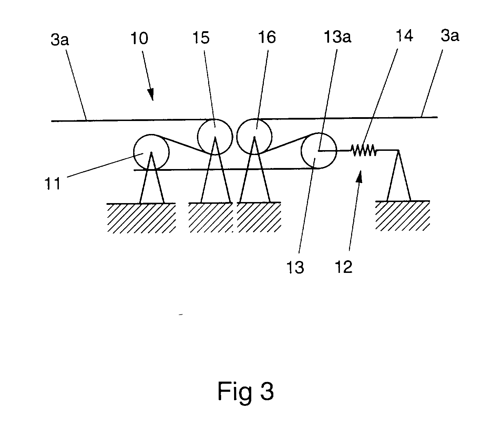

A particularly favorable driving mechanism 10 which can be manufactured in an economical manner and which moreover occupies very little space is shown in Fig. 3 and is formed by an assembly of tensioning sheaves 12 and pocketed sheaves 11 which in at least one of the straight track parts on each floor 2a-2f engage the link chain or chains. The tensioning means 12 comprise a freely rotating tensioning sheave 13 at each driven pocketed sheave 11. The shaft 13a of each freely rotating tensioning sheave 13, arranged downstream of the driven pocketed sheave 11, is pre-tensioned in the direction away from the driven pocketed sheave 11, for instance by means of a draw spring 14. Accordingly, the product-supporting conveyor part is prevented from slacking downstream of the driving mechanism 10. If a floor consists of a number of loops, it is particularly favorable if each loop 10 has its own driving mechanism 10. Thus, it may very well occur that a single floor 2a-2f has more than one driving mechanism 10. However, the driving mechanisms 10 of a single floor 10 will always be driven in synchronization.

In a particularly practical embodiment of the storage apparatus, the conveyor chain 3 at the location of the driving mechanism 10 is guided downwards from the conveying plane over first return sheaves 15. Next, the conveyor chain is guided over the above-mentioned pocketed sheaves 11, from the pocketed sheaves 11 under the conveying plane towards the tensioning sheaves 13, and from the tensioning sheaves 13 to second return sheaves 16, to further continue its conveying path from there. The second return sheaves 16 are arranged adjacent the first return sheaves 15 in such a manner that the conveyor parts 3a bounded by the return sheaves 15, 16 connect to each other so that the conveying path is not interrupted by the driving mechanism 10. A driving mechanism 10 of such design has a minimum overall height, enabling the floors 2a-2f to be superimposed so as to be very closely spaced.

It is understood that the invention is not limited to the exemplary embodiment described, but that various modifications are possible within the purview of the invention.

## Claims

1. A storage apparatus for products, such as for instance loaves of bread, and/or product carriers, such as for instance baking tins wherein or whereon loaves of bread or the like are located, the storage apparatus comprising a storage area (1) containing a number of floors (2a-2f), said floors (2a-2f) being formed by a product-supporting conveyor part (3a) of an endless conveyor belt or chain (3), **characterized in that** each floor (2a-2f) is formed by one endless conveyor belt or chain (3), closed in itself, the conveyor belts or chains (3) of the different floors (2a-2f) each being independently drivable relative to one another, the product-supporting conveyor part (3a) on each floor being bounded by an entrance (4) and an exit (5), and a return part (3b) of each endless conveyor belt or chain (3) which forms a floor (2a-2f) being located in a cleaning area (6) located outside the storage area (1), in which cleaning area (6) a cleaning apparatus (7) is provided adjacent each return part for cleaning the conveyor belt or chain (3).

2. A storage apparatus according to claim 1, characterized in that the product-supporting conveyor part (3a) moves in a number of loops, said loops being preferably formed by straight track parts interconnected via bends, the return part (3b) interconnecting the entrance (4) and the exit (5) of the product-supporting conveyor part (3a) via a shortest possible path.

3. A storage apparatus according to claim 2, characterized in that the entrance (3) and the exit (4) of the product-supporting conveyor part (3a) are in line, and each connect, via a perpendicular bend (17, 18) in the product-supporting conveyor part (3a), to a straight track part of the looped product-supporting conveyor part (3a).

4. A storage apparatus according to any one of the preceding claims, characterized in that each floor entrance (4) and each floor exit (5) of the storage apparatus is connectable via a switch (8, 9) to at least one feed conveyor and at least one discharge conveyor respectively.

5. A storage apparatus according to any one of claims 1-4, characterized in that at least the storage area (1) is located in a casing wherein the climatological conditions are controllable.

6. A storage apparatus according to any one of claims 1-5, characterized in that the conveyor chain (3) comprises at least two link chains of the ship's anchor type, which link chains extend in the direction of the conveying path and are interconnected by cross-bars constituting the bearing surface of the conveyor chain.

7. A storage apparatus according to any one of the preceding claims, characterized in that each floor (2a-2f) comprises at least one autonomously controllable driving mechanism (10a-10f).

8. A storage apparatus according to claims 6 and 7, characterized in that the driving mechanism (10) is formed by pocketed sheaves (11) which in at least one of the straight track parts on each floor (2a-2f) engage the link chain or chains, tensioning means (12) being provided comprising a freely rotating tensioning sheave (13) at each driven pocketed sheave (11), whilst the shaft of the freely rotating tensioning sheave (13a), arranged downstream of the driven pocketed sheave (11), is pre-tensioned in the direction away from the driven pocketed sheave (11), for instance by means of a draw spring (14).

9. A storage apparatus according to claim 8, characterized in that the conveyor chain (3) at the location of the driving mechanism (10) is guided downwards from the conveying plane over first return sheaves (15), then guided over said pocketed sheaves (11), from the pocketed sheaves (11) under the conveying plane towards the tensioning sheaves (13), and from the tensioning sheaves (13) to second return sheaves (16) for further continuing the conveying path, the second return sheaves (15) being arranged adjacent the first return sheaves (15) in such a manner that the conveyor parts (3a) bounded by the return sheaves (15, 16) connect to each other so that the conveying path is not interrupted by the driving mechanism (10).
